# EUROPÄISCHE PATENTSCHRIFT

(11) **EP 3 397 868 B1**
(45) Veröffentlichungstag und Bekanntmachung des Hinweises auf die Patenterteilung: **17.02.2021**
(21) Anmeldenummer: 16826018.0
(22) Anmeldetag: 16.12.2016
(51) Int. Cl.: F16B 13/14

(54) **VERBUNDANKER**
INJECTION MORTAR
MORTIER D'INJECTION

(30) Priorität: 30.12.2015 DE 102015122950
(43) Veröffentlichungstag der Anmeldung: 07.11.2018
(73) Patentinhaber: Fraunhofer-Gesellschaft zur Förderung der angewandten Forschung e.V., 80686 München (DE)
(72) Erfinder: DREYER, Christian, 55758 Niederwörresbach (DE)
(74) Vertreter: Weisse, Renate
(86) Internationale Anmeldenummer: PCT/EP2016/081450
(87) Internationale Veröffentlichungsnummer: WO 2017/114667

(56) Entgegenhaltungen:
- EP-A1- 3 061 978
- EP-A2- 2 233 753
- DE-A1-102009 031 188

## Beschreibung

### Technisches Gebiet

Die Erfindung betrifft einen Verbundanker zum Verankern eines Befestigungselements innerhalb eines Bohrlochs, enthaltend
(a) eine in einem Aushärtprozess aushärtbare chemische Zusammensetzung; und
(b) Mittel zum Auslösen des Aushärteprozesses, wobei
(c) die chemische Zusammensetzung bei Bestrahlung mit elektromagnetischer Strahlung aushärtet; und
(d) das Mittel zum Auslösen des Aushärtprozesses von einer Strahlungsquelle für elektromagnetische Strahlung gebildet ist.

Ein derartiger Verbundanker ist beispielsweise in EP-A-2 233 753 gezeigt.

Ein Verbundanker wird auch als chemischer Dübel oder Injektionsmörtel bezeichnet. Typische Befestigungselemente sind Gewindestäbe, die auch als Ankerstangen oder Ankerstäbe bezeichnet werden. Zum Befestigen eines Befestigungselements wird eine chemische Zusammensetzung, beispielsweise in Patronenform, in ein Bohrloch eingebracht. Das Bohrloch bildet dann den Ankerbereich. Der Verbundanker wird nicht wie ein Spreizdübel gespreizt, sondern ausgehärtet. Die chemische Zusammensetzung verbindet sich dabei mit dem umgebenden Wandmaterial. Das Befestigungselement wird üblicherweise zusammen mit der chemischen Zusammensetzung in den Ankerbereich eingebracht.

### Stand der Technik

Aus der DE 2247133 A sind chemische Dübel auf Basis von Reaktivharzen zur Verankerung von Befestigungselementen in Beton und Mauerwerk bekannt. EP 0703197 B1, EP 2357162 B1 und EP 1937745 B1 offenbaren 2-Komponenten-Systeme zur Verwendung als chemische Dübel. Solche Dübel weisen hohe Festigkeiten auf. Bekannte chemische Dübel benötigen je nach Bohrlochtemperatur vergleichsweise lange Zeit zur Aushärtung. Entsprechend wird lange Zeit zum Erreichen der Endfestigkeit benötigt. Andere chemische Dübel härten innerhalb kurzer Zeit aus. Dadurch bleibt nur wenig Zeit zur Applikation und Justagekorrektur. Problematisch ist ferner, dass sowohl die Verarbeitungszeiten, als auch die Härtungszeiten stark temperaturabhängig sind. So härtet beispielsweise ein System bei einer Temperatur von 40°C innerhalb eines Zeitraums von 15 Minuten und bei einer Temperatur von -1°C innerhalb von 6 Stunden.

Bei bekannten chemischen Dübeln ist vorgesehen, dass sie nach dem Mischen der beiden Komponenten nur eine sehr begrenzte Verarbeitungszeit (sogenannte Topfzeit) aufweisen, wobei diese zudem stark von der Bohrlochtemperatur abhängig ist. Das auf der Internetseite www.hilti.de offenbarte System Hilti HIT-HY-270 ist beispielsweise bei Temperaturen unterhalb von + 10°C innerhalb von 10 Minuten verarbeitbar, bei Temperaturen zwischen 20 und 29 °C nur noch innerhalb von vier Minuten, und bei einer Temperatur von 40°C nur noch innerhalb einer Minute. Die Aushärtezeit liegt, wiederum temperaturabhängig, zwischen 6 h bei einer Temperatur von -1 bis -5°C und 15 Minuten bei einer Temperatur von +40°C. Die Firma Fischer bietet auf der Internetseite www.fischer.de schnelle Systeme auf Basis von Patronen an, welche durch das Eindrehen der Schraube aktiviert werden und bei Raumtemperatur innerhalb von 2 Minuten härten. Eine Korrektur oder Nachjustierung ist mit diesen Systemen bereits wenige Sekunden nach Öffnen der Patrone nicht mehr möglich.

Die Härtung von Reaktivharzen mit ultravioletter (UV-) Strahlung ist bekannt. UVhärtende Beschichtungen werden beispielsweise im Automobil-Bereich und in der Druckindustrie in Form UV-härtenden Farben verwendet. Zur Herstellung von Faserverbundwerkstoffen werden UV-reaktive Harze eingesetzt. Sie finden ferner Verwendung als Klebstoffe. Die UV-Härtung ist nur für eine vergleichsweise geringe Eindringtiefe möglich. Diese ist bedingt durch die Absorption der Harze sowie des benötigten Photoinitators. In Abhängigkeit von der Wellenlänge liegt das obere Limit bei etwas über einem Zentimeter.

DE 10 2015 203 511 A1 offenbart eine Befestigungsstange aus einem endlosfaserverstärktem Verbundwerkstoff mit einer metallischen Hülse. Die Befestigungsstange wird in eine Bohrung im Mauerwerk eingeklebt. An der Hülse können Anbauteile befestigt werden. Explizit ist vorgesehen, dass die Befestigungsstange nicht aus Metall bestehen soll. Die Druckschrift offenbart, dass die Befestigungsstange von Glasfasern gebildet sein kann und ein Einkomponenten-Klebesystem eingesetzt wird, dass unter der Einwirkung von UV-Licht aushärtet.

DE 10 2009 031 188 A1 offenbart ein Montagesystem zur Anbringung von Befestigungselementen mittels lichtaushärtenden Klebstoffen auf glatten Oberflächen. Das Montagesystem hat zum Ziel, Bohrlöcher in der Oberfläche zu vermeiden.

### Offenbarung der Erfindung

Es ist Aufgabe der Erfindung, einen Verbundanker der eingangs genannten Art zu schaffen, der eine besonders hohe Stabilität aufweist und zu einem frei wählbaren Zeitpunkt schnell aushärtet.

Erfindungsgemäß wird die Aufgabe durch die kennzeichnenden Merkmale des Anspruchs 1 gelöst. Vorteilhafte Ausgestaltungen des erfindungsgemässen Verbundankers sind in den abhängigen Ansprüchen definiert. Die Erfindung betrifft darüber hinaus auch die Verwendung eines durch Bestrahlung mit UV-Strahlung aushärtbaren Reaktivharzes und einer Strahlungsquelle innerhalb eines Verankerungsbereichs in einem Bohrloch als Verbundanker zum Verankern eines Befestigungselements, wie in Anspruch 11 definiert.

Eine geeignete chemische Zusammensetzung ist insbesondere ein Reaktivharz, das mit Glasfasern oder Glaspulver verstärkt sein kann. Beispiele für UV-härtbare Reaktivharze sind: Acrylatharze, Epoxide, ungesättigte Polyesterharze, und Vinylesterharze.

Mit der vorliegenden Erfindung wird eine chemische Zusammensetzung verwendet, die durch Strahlung ausgehärtet wird. Dabei wird die Strahlungsquelle direkt im Verankerungsbereich angeordnet. Es ist also keine große Eindringtiefe für die Strahlung erforderlich. Die Aushärtung beginnt erst mit Einschalten der Strahlungsquelle. Entsprechend besteht die Möglichkeit zur nachträglichen Justage nach Einbringung der chemischen Zusammensetzung und des Ankers in das Bohrloch. Mit eingeschalteter Strahlungsquelle kann eine besonders schnelle Aushärtung bewirkt werden. Sofern die chemische Zusammensetzung vor Strahlung geschützt ist, lassen sich die Materialien problemlos über lange Zeiträume lagern.

Mit der Erfindung können neuartige, blitzschnelle Befestigungssysteme für Bauanwendungen mit einer sehr hohen Lagerstabilität entwickelt werden. Diese Entwicklung wird die Bauindustrie in die Lage versetzen, Befestigungen schneller, zuverlässiger und zudem weitgehend witterungs- d.h. vor allem temperaturunabhängiger anzubringen. Die Erfindung ermöglicht, dass Befestigungselemente mit UV-härtenden chemischen Dübeln in Sekundenschnelle fixiert und binnen kürzester Zeit belastet werden können, was sich vorteilhaft auf den Baufortschritt auswirkt. Weiterhin können bei komplexen und/oder schlecht zugänglichen Stellen die Befestigungselemente in Ruhe justiert werden.

Die Erfindung kann insbesondere im Bereich des Bauwesens und der Bauchemie eingesetzt werden. Eine Erweiterung der Anwendungsbereiche auf andere Branchen wie z. B. den Leichtbau bei Windkraftanlagen, Flugzeugen, Schiffen oder Zügen ist ebenfalls möglich.

Vorzugsweise ist vorgesehen, dass die chemische Zusammensetzung bei Bestrahlung durch die Strahlungsquelle mit Strahlung aushärtet, die eine Wellenlänge im Bereich zwischen 300 nm und 420 nm, vorzugsweise im Bereich zwischen 330 nm bis 420 nm und höchst vorzugsweise im Bereich von 360 bis 420 nm aufweist. Diese Strahlung lässt sich beispielsweise mit Leuchtdioden (LED) erzeugen. Je länger die Wellenlänge, desto höher die Eindringtiefe. Die intensitätsnormierten Kosten für LEDs sinken mit längeren Wellenlängen.

Bei einer ersten Variante der Erfindung ist vorgesehen, dass die Strahlungsquelle ganz oder teilweise dauerhaft im Verankerungsbereich verbleibt. Insbesondere kann die Strahlungsquelle wenigstens eine Leuchtdiode umfassen, welche im Verankerungsbereich angeordnet ist und Kontakte zur Stromversorgung und Ansteuerung außerhalb des Verankerungsbereichs aufweist. Die rasante Entwicklung hin zu immer leistungsfähigeren und immer kostengünstigeren UV-LEDs ermöglicht den Einsatz der Erfindung. Für den einmaligen Gebrauch eignen sich insbesondere auch UV-LEDs, welche die Spezifikationen für den Langzeiteinsatz nicht erfüllen und ansonsten als Fehlchargen aussortiert werden müssten. Es ist nicht erforderlich, eine aufwendige Optimierung des Betriebs, etwa hinsichtlich der erzeugten Wärme, vorzunehmen. Die LED wird nur einmalig kurzzeitig eingeschaltet. Danach wird sie nicht mehr benötigt.

Alternativ kann vorgesehen sein, dass die Strahlungsquelle wenigstens einen Lichtleiter umfasst, der im Verankerungsbereich angeordnet ist und in welchen Licht von außerhalb des Verankerungsbereichs einspeisbar ist. Dann kann die Strahlungsquelle selber mehrfach eingesetzt werden. Lediglich ein Stück Lichtleiter verbleibt im Verankerungsbereich.

Bei einer dritten Alternative der Erfindung ist vorgesehen, dass
(a) eine in den Verankerungsbereich einführbare Hülse vorgesehen ist;
(b) die Hülse Bereiche aufweist, welche für die Strahlung der Strahlungsquelle durchlässig sind; und
(c) die Strahlungsquelle rückholbar in die Hülse einführbar ist.

Die Hülse kann vollständig transparent für die Strahlung sein. Es kann aber auch vorgesehen sein, dass die Hülse aus kostengünstigem, strahlungsundurchlässigem Kunststoff oder Metall gebildet ist und Öffnungen aufweist, welche mit strahlungsdurchlässiger Folie oder Quarzglasplatten oder sonstigen UV-transparenten Materialien bedeckt sind. Die Folie oder Quarzglasplatte verhindert, dass die chemische Zusammensetzung in das Innere der Hülse eindringt. Die Hülse kann als Gewindehülse ausgebildet sein. Bei dieser Ausgestaltung schützt die Hülse die Strahlungsquelle vollständig und ermöglicht deren Wiederverwendung. Die Strahlung gelangt durch die Öffnungen in den Bereich, außerhalb der Hülse und löst so den Aushärtprozess aus. Bei hinreichend kleinen Öffnungen und hinreichend hoher Viskosität der chemischen Zusammensetzung dringt keine nennenswerte Menge des Harzes in die Hülse ein und es kann die Bedeckung der Fenster auch entfallen.

Bei einer besonders vorteilhaften Ausgestaltung der Erfindung ist die chemische Zusammensetzung von einem aushärtbaren 1-Komponenten-Reaktivharz gebildet. Das Reaktivharz erfordert dann keine weitere chemische Behandlung und kann einfach gelagert und verwendet werden, solange es keiner aktivierenden Strahlung ausgesetzt wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnung

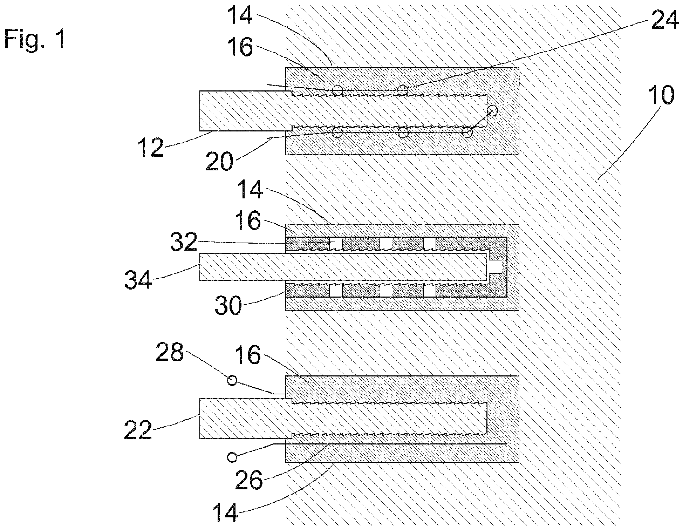

- Fig. 1: zeigt einen Querschnitt durch eine Wand mit drei verschiedenen Verbundankervarianten.

### Beschreibung des Ausführungsbeispiels

Figur 1 zeigt einen Querschnitt durch eine Wand 10 mit drei verschiedenen Verbundankervarianten. Mit dem Verbundanker soll ein Befestigungselement 12 und 22 an der Wand befestigt werden. Im den vorliegenden Ausführungsbeispielen sind die Befestigungselemente von einer Gewindestange aus Edelstahl, einem anderen Metall oder einer Legierung gebildet. Es versteht sich, dass auch jedes andere stabile Befestigungselement, etwa ein Haken aus Edelstahl, einem anderen Metall oder einer Legierung oder dergleichen befestigt werden kann.

Zur Vorbereitung der Befestigung wird ein Bohrloch 14 in die Wand 10 gebohrt und ggf. gereinigt. In das Bohrloch 14 wird ähnlich wie bei bekannten Verbundankern eine Patrone mit einer aushärtbaren chemischen Zusammensetzung 16 eingeführt oder das Harz mittels einer Spritze oder Kartusche direkt eingespritzt. Anders als bei bekannten Verbundankern besteht die chemische Zusammensetzung 16 aber aus einem glasfaserverstärkten Einkomponenten-Reaktivharz, das nur durch Bestrahlung mit UV-Licht aushärtet. Der Reaktivharz härtet also zunächst nicht aus.

Durch Einschrauben der Befestigungselemente 12 oder 22 wird die zugehörige Patrone geöffnet. Der Inhalt dringt in Unebenheiten und Öffnungen der das Bohrloch 14 umgebenden Wand 10. Im Bohrloch sind LEDs 24 vorgesehen. Uber Leiter 20 sind die LEDs 24 nach außen kontaktiert. Wenn das Befestigungselement 12 korrekt positioniert und ggf. nachjustiert wurde, werden die LEDs 24 eingeschaltet. Hierzu sind ein üblicher elektrischer Schaltkreis und eine Stromquelle vorgesehen, die hier der Einfachheit halber nicht dargestellt sind.

Die LEDs 24 strahlen Strahlung mit einem Strahlungsmaximum im Bereich 360 bis 420 nm ab. Bei Bestrahlung mit Licht dieser Wellenlänge härtet der Reaktivharz sehr schnell aus. Richtige Mischung und richtigen Photoinitiator vorausgesetzt, härtet es bei jeder Wellenlänge im obigen Bereich schnell aus. Zu beachten ist die Eindringtiefe, die geringer wird mit geringerer Wellenlänge. Im vorliegenden Ausführungsbeispiel sitzen 5 LEDs 24 im Ankerbereich um den versenkten Teil des Befestigungselements 12 herum. Beim Einschalten bestrahlen die LEDs 24 das Reaktivharz, so dass dieses schnell, d.h. innerhalb von Sekunden aushärten kann. Die LEDs 24 verbleiben dauerhaft im Ankerbereich. Das ausgehärtete Reaktivharz hat ähnlich wie bekannte Verbundanker eine hohe Festigkeit.

Das Befestigungselement 22 wird ebenfalls in eine Patrone mit einer aushärtbaren chemischen Zusammensetzung 16 eingeführt. In dieser sitzen jedoch keine LEDs, sondern Lichtleiter 26. Die Lichtleiter 26 sind optische Glasfasern mit einem angepassten Abstrahlprofil. Die Lichtleiter 26 dienen nicht zur Aufnahme von Kräften. Die Lichtleiter 26 erstrecken sich in Längsrichtung bis fast zum Ende des Bohrlochs. Hier sind die Lichtleiter 26 so zu wählen, dass sie seitlich Licht auskoppeln um das gesamte Harz aushärten zu können. Alternativ können auch mehrere unterschiedlich lange Lichtleiter eingesetzt werden, die nur am Ende Licht auskoppeln. In die Lichtleiter 26 wird Licht aus einer Lichtquelle 28 eingespeist. Auch hier sind LEDs als Lichtquelle 28 geeignet. Da die Lichtquelle 28 jedoch außerhalb des Bohrlochs und außerhalb des Ankerbereichs angeordnet ist, ist es bei dieser Ausgestaltung auch möglich hochwertige, teure und größere Lichtquellen 28 zu verwenden. Diese können wiederverwendet werden. Während jeder Lichtleiter in der Darstellung mit einer eigenen Lichtquelle 28 versehen ist, ist es selbstverständlich auch möglich, Licht aus einer gemeinsamen Lichtquelle 28 in mehrere Lichtleiter 26 einzuspeisen. Wie bei der Verwendung von versenkten LEDs 24 kann die Aushärtung durch einfaches Einschalten der Lichtquelle 28 ausgelöst werden. Nach dem Aushärten wird die Lichtquelle 28 getrennt und bei Bedarf wiederverwertet. Die Lichtleiter 26 werden vor der Wandoberfläche der Wand 10 abgetrennt. Die Enden verbleiben innerhalb des Ankerbereichs.

Das mittlere Bohrloch 14 ist mit Reaktivharz versehen, der im Inneren eine Hülse 30 aufweist. Die Hülse 30 besteht aus Metall mit höherer Festigkeit. In der Hülse sind Öffnungen 32 vorgesehen. Eine lichtdurchlässige Folie verhindert, dass der Reaktivharz 16 durch die Öffnungen 32 in den Innenraum der Hülse 30 gelangt. Die Hülse 30 weist ein Innengewinde auf, in welches ein Befestigungselement eingeschraubt werden kann. Zum Aushärten wird ein Lichtleiter 34 oder eine andere Lichtquelle in den Innenraum der Hülse 30 eingeführt und die Lichtquelle eingeschaltet. Nach dem Aushärten kann der Lichtleiter 34 schadenfrei aus der Hülse 30 herausgezogen werden. Anschließend wird das Befestigungselement (nicht dargestellt) eingeschraubt.

## Patentansprüche

1. Verbundanker zum Verankern eines Befestigungselements (12, 22) innerhalb eines Bohrlochs, enthaltend
(a) eine in einem Aushärtprozess aushärtbare chemische Zusammensetzung (16); und
(b) Mittel zum Auslösen des Aushärtprozesses (24; 26, 28; 34); wobei
(c) die chemische Zusammensetzung (16) bei Bestrahlung mit elektromagnetischer Strahlung aushärtet;
(d) das Mittel zum Auslösen des Aushärtprozesses von einer Strahlungsquelle (24; 26, 28; 34) für elektromagnetische Strahlung gebildet ist;
**dadurch gekennzeichnet, dass**
(e) die Strahlungsquelle (24; 26, 28; 34) innerhalb des Verankerungsbereichs in dem Bohrloch angeordnet ist, wobei
(f1) die Strahlungsquelle (24; 26, 28) ganz oder teilweise dauerhaft im Verankerungsbereich verbleibt und nicht zur Aufnahme von Kräften dient, oder
f2) eine die Strahlungsquelle (34) umgebende Hülse (30), in welche die Strahlungsquelle (34) rückholbar einführbar ist, dauerhaft im Verankerungsbereich verbleibt.

2. Verbundanker nach Anspruch 1, **dadurch gekennzeichnet, dass** die chemische Zusammensetzung (16) ein Reaktivharz ist.

3. Verbundanker nach Anspruch 2, **dadurch gekennzeichnet, dass** der Reaktivharz (16) mit Glasfasern oder Glaspulver verstärkt ist.

4. Verbundanker nach einem der vorgehenden Ansprüche, **dadurch gekennzeichnet, dass** die chemische Zusammensetzung bei Bestrahlung durch die Strahlungsquelle (24; 26, 28; 34) mit Strahlung aushärtet, die eine Wellenlänge im Bereich zwischen 300 nm und 420 nm, vorzugsweise im Bereich zwischen 330 nm bis 420 nm und höchst vorzugsweise im Bereich von 360 bis 420 nm aufweist.

5. Verbundanker nach einem der vorgehenden Ansprüche, **dadurch gekennzeichnet, dass** die Strahlungsquelle wenigstens eine Leuchtdiode (24) umfasst, welche im Verankerungsbereich (16) angeordnet ist und Kontakte (20) zur Stromversorgung und Ansteuerung außerhalb des Verankerungsbereichs (16) aufweist.

6. Verbundanker nach Anspruch 4, **dadurch gekennzeichnet, dass** die Strahlungsquelle (26, 28) wenigstens einen Lichtleiter (26) umfasst, der im Verankerungsbereich (16) angeordnet ist und in welchen Licht von außerhalb des Verankerungsbereichs einspeisbar ist.

7. Verbundanker nach einem der vorgehenden Ansprüche, **dadurch gekennzeichnet, dass** die Hülse (30) Bereiche (32) aufweist, welche für die Strahlung der Strahlungsquelle (34) durchlässig sind.

8. Verbundanker nach Anspruch 7, **dadurch gekennzeichnet, dass** die Hülse (30) aus strahlungsundurchlässigem Kunststoff oder Metall gebildet ist und Bereiche in Form von Öffnungen (32) aufweist, welche mit strahlungsdurchlässiger Folie oder Glasplatten bedeckt sind.

9. Verbundanker nach einem der vorgehenden Ansprüche, **dadurch gekennzeichnet, dass** die Hülse (30) als Gewindehülse ausgebildet ist.

10. Verbundanker nach einem der vorgehenden Ansprüche, **dadurch gekennzeichnet, dass** die chemische Zusammensetzung (16) von einem strahlenchemisch aushärtbaren 1-Komponenten-Reaktivharz gebildet ist.

11. Verwendung eines durch Bestrahlung mit UV-Strahlung aushärtbaren Reaktivharzes und einer Strahlungsquelle innerhalb eines Verankerungsbereichs in einem Bohrloch als Verbundanker zum Verankern eines Befestigungselements, wobei die Strahlungsquelle (24; 26, 28) ganz oder teilweise dauerhaft im Verankerungsbereich verbleibt und nicht zur Aufnahme von Kräften dient, oder eine die Strahlungsquelle (34) umgebende Hülse (30), in welche die Strahlungsquelle (34) rückholbar einführbar ist, dauerhaft im Verankerungsbereich verbleibt.

## Claims

1. Injection mortar for fixing a fixing element (12, 22) within a bore hole comprising
(a) a chemical composition (16) adapted to cure in a curing process; and
(b) means for starting said curing process (24; 26, 28; 34)
wherein
(c) the chemical composition (16) cures upon exposure to electromagnetic radiation;
(d) the means for starting said curing process is formed by a radiation source (24; 26, 28; 34) for electromagnetic radiation;
**characterized in that**
(e) the radiation source (24; 26, 28; 34) is provided within the injection mortar range in the bore hole, wherein
(f1) the radiation source (24; 26, 28) entirely or partly remains in the injection mortar range and does not serve to receive forces, or
(f2) a sleeve (30) surrounding the radiation source (34) adapted to retractably receive the radiation source (34), permanently remains in the injection mortar range.

2. Injection mortar according to claim 1, **characterized in that** the chemical composition (16) is a reactive resin.

3. Injection mortar according to claim 2, **characterized in that** the reactive resin (16) is reinforced with glass fibers or glass powder.

4. Injection mortar according to any of the preceding claims, **characterized in that** the chemical composition cures upon exposure to the radiation from the radiation source (24; 26, 28; 34) with a wavelength in the range between 300 nm and 420 nm, preferably in the range between 330 and 420 nm and most preferably in the range between 360 and 420 nm.

5. Injection mortar according to any of the preceding claims, **characterized in that** the radiation source comprises at least one light emitting diode (24) which is arranged in the injection mortar range (16) and which has contacts (20) for the current supply and for the control outside the injection mortar range (16).

6. Injection mortar according to claim 4, **characterized in that** the radiation source (26, 28) comprises at least one optical fiber (26), which is arranged in the injection mortar range (16) and which is fed with light from the outside of the injection mortar range.

7. Injection mortar according any of the preceding claims, **characterized in that** the sleeve (30) is provided with ranges (32) which are transparent for the radiation of the radiation source (34).

8. Injection mortar according to claim 7, **characterized in that** sleeve (30) is formed by a plastic material or metal which is opaque for the radiation and is provided with ranges in the form of openings (32) which are covered by transparent film or glass layers.

9. Injection mortar according to any of the preceding claims, **characterized in that** the sleeve (30) has the form of a threaded sleeve.

10. Injection mortar according to any of the preceding claims, **characterized in that** the chemical composition (16) is formed by a radiation-chemically curable 1-component reactive resin.

11. Use of a reactive resin which is curable by exposure to UV radiation and of a radiation source as an injection mortar in a bore hole for fixing a fixing element wherein the radiation source (24; 26, 28) entirely or partly permanently remains in the injection mortar range and does not serve to receive forces, or a sleeve (30) surrounding the radiation source (34) adapted to retractably receive the radiation source, permanently remains in the injection mortar range.

## Revendications

1. Cheville chimique destinée à ancrer un élément de fixation (12, 22) à l'intérieur d'un trou percé, comprenant
(a) une composition chimique (16) pouvant durcir au cours d'un processus de durcissement ; et,
(b) des moyens destinés à déclencher le processus de durcissement (24 ; 26, 28 ; 34),
(c) la composition chimique (16) durcit lorsqu'elle est exposée à un rayonnement électromagnétique,
(d) le moyen destiné à déclencher le processus de durcissement est formé d'une source de rayonnement (24 ; 26, 28 ; 34) pour rayonnement électromagnétique ;
**caractérisée en ce que**
(e) la source de rayonnement (24 ; 26, 28 ; 34) est disposée à l'intérieur de la zone d'ancrage dans le trou percé,
(f1) la source de rayonnement (24 ; 26, 28) reste partiellement ou entièrement en permanence dans la zone d'ancrage sans servir à absorber de forces ou
(f2) une douille (30) enveloppant la source de rayonnement (34) et dans laquelle la source de rayonnement (34) peut être introduite de manière à pouvoir en être extraite reste en permanence dans la zone d'ancrage.

2. Cheville chimique selon la revendication 1, **caractérisée en ce que** la composition chimique (16) est une résine réactive.

3. Cheville chimique selon la revendication 2, **caractérisée en ce que** la résine réactive (16) est renforcée par fibres de verre ou poudre de verre.

4. Cheville chimique selon l'une quelconque des revendications précédentes, **caractérisée en ce que** la composition chimique durcit lorsqu'elle est exposée au rayonnement de la source de rayonnement (24 ; 26, 28 ; 34) qui présente une longueur d'onde dans une plage comprise entre 300 nm et 420 nm, de préférence dans une plage comprise entre 330 nm et 420 nm et au mieux dans une plage allant de 360 à 420 nm.

5. Cheville chimique selon l'une quelconque des revendications précédentes, **caractérisée en ce que** la source de rayonnement comprend au moins une diode luminescente (24) qui est disposée dans la zone d'ancrage (16) et présente des contacts (20) pour l'alimentation en courant électrique et la commande à l'extérieur de la zone d'ancrage (16).

6. Cheville chimique selon la revendication 4, **caractérisée en ce que** la source de rayonnement (26, 28) comprend au moins un conducteur de lumière (26) qui est disposé dans la zone d'ancrage (16) et peut être alimenté en lumière depuis l'extérieur de la zone d'ancrage.

7. Cheville chimique selon l'une quelconque des revendications précédentes, **caractérisée en ce que** la douille (30) présente des zones (32) qui sont perméables au rayonnement de la source de rayonnement (34).

8. Cheville chimique selon la revendication 7, **caractérisée en ce que** la douille (30) est formée de matière synthétique imperméable au rayonnement ou de métal et présente des zones en forme d'orifices (32) couvertes d'un film perméable au rayonnement ou de plaques de verre.

9. Cheville chimique selon l'une quelconque des revendications précédentes, **caractérisée en ce que** la douille (30) est configurée sous forme de douille filetée.

10. Cheville chimique selon l'une quelconque des revendications précédentes, **caractérisée en ce que** la composition chimique (16) est formée de résine réactive mono-composant pouvant durcir par rayonnement chimique.

11. Utilisation d'une résine réactive pouvant durcir en étant exposée au rayonnement d'UV et d'une source de rayonnement à l'intérieur d'une zone d'ancrage dans un trou percé sous forme de cheville chimique destinée à ancrer un élément de fixation, la source de rayonnement (24 ;26, 28) restant entièrement ou partiellement en permanence dans la zone d'ancrage sans servir à absorber de forces ou une douille (30) enveloppant la source de rayonnement (34) et dans laquelle la source de rayonnement (34) peut être introduite de manière à pouvoir en être extraite reste en permanence dans la zone d'ancrage.
